# EUROPEAN PATENT APPLICATION

(11) **EP 2 390 853 A1**
(43) Date of publication of application: **30.11.2011**
(21) Application number: 11167185.5
(22) Date of filing: 23.05.2011
(51) Int. Cl.: G08B 13/196, G08B 25/14, G05B 23/02

(54) **Time based visual review of multi-polar incidents**

(30) Priority: 26.05.2010 US 787524
(71) Applicant: Honeywell International Inc., Morristown, NJ 07962-2245 (US)
(72) Inventor: Deepakumar, Subbian, 560076, Bangalore (IN); Salgar, Mayur S., 560076, Bangalore (IN); Drive, Marine, 560076, Bangalore (IN)
(74) Representative: Buckley, Guy Julian

(57) **Abstract**

A system and method for time based review of multi-polar incidents is provided. The method includes selecting at least one past alarm incident, and populating a floor plan map with representations of the past alarm incident and a set of alarms that were active during the past alarm incident.

## Description

### FIELD OF INVENTION

The present invention relates generally to video management systems used in connection with surveillance systems. More particularly, the present invention relates to systems and methods for correlating a past alarm incident with a floor plan map at the time of the incident.

### BACKGROUND

Known video management systems (VMS) and closed circuit television (CCTV) systems used in security surveillance can include a plurality of cameras and a workstation. The cameras can be dispersed in a monitored area, and the workstation can display video data streams associated with the plurality of cameras. Each camera can monitor a particular zone in the monitored area, and security personnel or another user at the workstation can view video data streams associated with each camera.

Many video management systems can display alarm views and floor plan maps of a monitored area on the workstation, and security personnel or another user can view the workstation to monitor the area for alarm incidents. For example, in some known video management systems, an activated alarm in the monitored area can be reported as a blinking icon on the floor plan map and/or in a list of active alarms displayed on the workstation. Although reporting alarms in this manner can be sufficient for real time monitoring, there are presently no easy, efficient, and effective methods for reviewing past alarm incidents on a floor plan map.

For example, when a burglary occurs in a monitored area, motion detection alarms, door forced open alarms, and camera sabotage alarms can all be activated. These alarms, as well as others, can be activated at multiple places in the monitored area and at related times. However, when a user reviews the alarm occurrences at a later time, known systems and methods only provide him with a list of the alarms that were activated.

To review a past alarm incident, the user must perform an alarm search, identify the timing of the alarm incident, and manually correlate each camera in the monitored area with the time of the alarm incident. This is often a difficult, tedious, and time-consuming process.

There is thus a continuing, ongoing need for systems and methods to correlate a past alarm incident with a floor plan map at the time of the incident. Preferably, such systems and methods provide a user with a time based ability to review floor plan maps in a holistic manner relative to the past alarm incident.

### BRIEF DESCRIPTION OF THE DRAWINGS

FIG. 1 is a flow diagram of a method for correlating a past alarm incident with a floor plan map in accordance with the present invention;

FIG. 2 is a block diagram of a system for carrying out methods in accordance with the present invention;

FIG. 3 is an interactive window displayed on a viewing screen of a graphical user interface for viewing a floor plan map of a monitored area in accordance with the present invention;

FIG. 4 is an interactive window displayed on a viewing screen of a graphical user interface for selecting a past alarm incident for viewing on a floor plan map in accordance with the present invention;

FIG. 5 is an interactive window displayed on a viewing screen of a graphical user interface for displaying a floor plan map with a past alarm incident in accordance with the present invention;

FIG. 6 is an interactive window displayed on a viewing screen of a graphical user interface for viewing video associated with a past alarm incident in accordance with the present invention; and

FIG. 7 is an interactive window displayed on a viewing screen of a graphical user interface for viewing video data streams associated with a plurality of cameras in a monitored area during a past alarm incident.

### DESCRIPTION OF THE PREFERRED EMBODIMENTS

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments of the present invention include systems and methods to correlate a past alarm incident with a floor plan map at the time of the incident. Preferably, such systems and methods provide a user with a time based ability to review floor plan maps in a holistic manner relative to the past alarm incident.

Systems and methods in accordance with the present invention can include a workstation for displaying video data streams and alarms associated with cameras and other devices in a surveillance system. The workstation in accordance with the present invention can include control circuitry, a programmable processor, and associated software, stored on a local computer readable medium, as would be understood by those of skill in the art.

In embodiments of the present invention, the workstation can display a floor plan map of a monitored area. The workstation can include a window for viewing a list of past alarm incidents, and a user can select one past alarm incident for displaying on an associated floor plan map. Then, systems and methods of the present invention can populate the floor plan map with all alarms in the monitored area that occurred during the selected one past alarm incident.

For example, if the user selects a burglary glass break alarm that occurred at 5 pm yesterday, the workstation can display the floor plan map at 5 pm yesterday. Thus, the workstation will display the floor plan map with the active burglary glass break alarm and any other alarms that were active at 5 pm yesterday. Accordingly, systems and methods of the present invention can display a holistic view of the monitored area during the time of the burglary.

In embodiments of the present invention, the workstation can also include a timeline control. Using the timeline control, a user can select a time, and the workstation can display the floor plan map from the selected time. For example, if the user selects 5 pm yesterday, systems and methods of the present invention can display the floor plan map from 5 pm yesterday, including active alarms from 5 pm yesterday.

The timeline control of the present invention also provides a user with the ability to fast forward and rewind floor plan map views. Thus, a user can easily and effectively identify patterns of active alarms.

In embodiments of the present invention, the floor plan map and/or video data streams associated with cameras in the monitored area can be exported for future use.

A workstation in accordance with the present invention can also include a window for displaying event types. When a past alarm incident or a time is selected for viewing, systems and methods of the present invention can display the floor plan map during the selected past alarm incident or selected time. The event type window can display the types and number of other alarms active during the selected past alarm incident or selected time.

A user can select a set of the active alarms displayed in the event type window for viewing. For example, when the floor plan map displays the burglary glass break alarm that occurred at 5 pm yesterday, the event type window can indicate that during this time there were also fifteen active motion detector alarms, one active camera sabotage alarm, and two active door forced open alarms. Depending on a user's need, he can select to only view the active motion detector alarms on the floor plan maps.

In embodiments of the present invention, systems and methods of the present invention can display all operator activity during the selected past alarm incident or the selected time. Thus, if an operator had performed an action on a camera in the monitored area during the past alarm incident, systems and methods can identify the action during subsequent review of the incident.

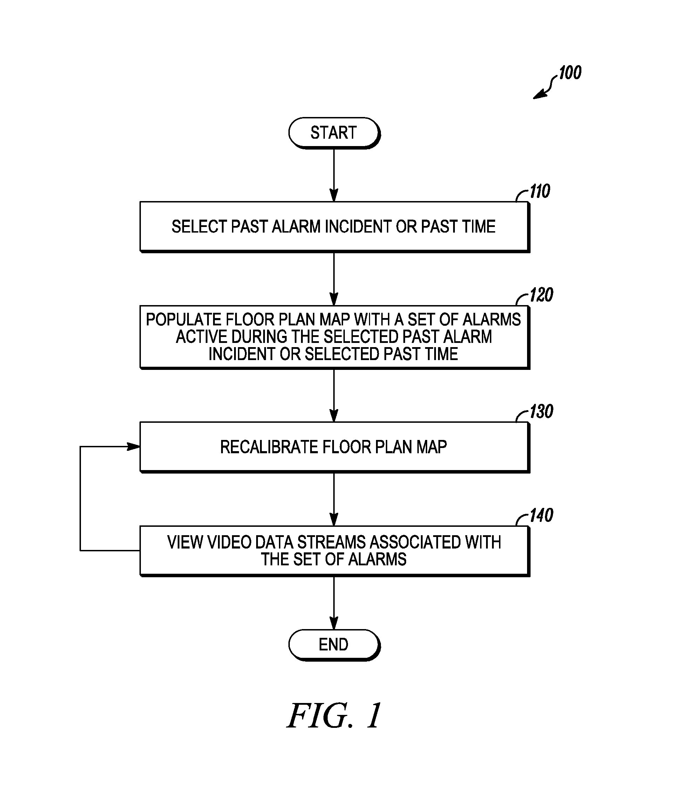

FIG. 1 is a flow diagram of a method 100 for correlating a past alarm incident with a floor plan map in accordance with the present invention. In the method, a user can select a past alarm incident or a past time as in 110. The user can select a past alarm incident via a list of past alarm incidents associated with the workstation. Similarly, the user can select a past time via a timeline control associated with the control station.

Once the past alarm incident or past time is selected, the method 100 can populate a floor plan map with a set of alarms that includes all alarms that were active during the selected past alarm incident or during the selected past time as in 120. The floor plan map can recalibrate to accurately and effectively display the set of alarms as in 130, and video data streams associated with the set of alarms can be displayed and viewed by the user as desired as in 140.

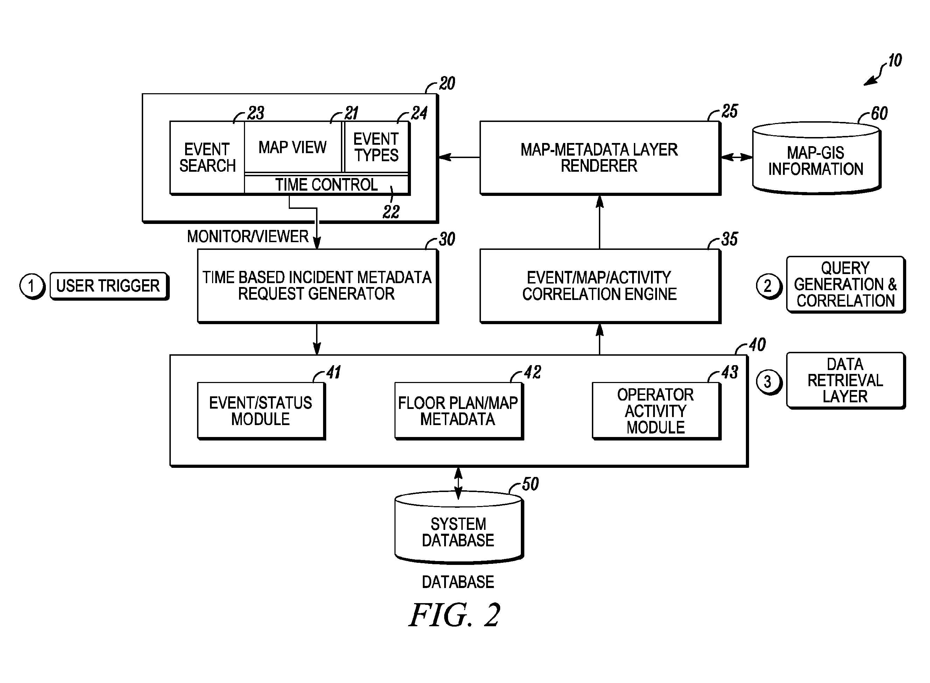

The method shown in FIG. 1 and others in accordance with the present invention can be implemented with the exemplary system 10 seen in FIG. 2. The workstation 20 of the system 10 can include a map view window 21 for displaying a floor plan map, a time controller 22 for controlling the period of time displayed on the workstation, a window 23 displaying a list of past alarm incidents, and a window 24 displaying a list of event types displayed on the floor plan map.

When a past alarm incident or a past time is selected by a user via the window 23 or the timeline controller 22, respectively, the workstation 20 can access a time base incident metadata request generator 30, which can access a data retrieval layer 40, which can access a system database 50. The system database 50 can return data related to event and status, the floor plan map, and operator activity to respective modules 41, 42, 43 of the data retrieval layer 40.

The data retrieval layer 40 can return the data to an event/map/activity correlation engine 35, which can return the data to a map-metadata layer renderer 25. The map-metadata layer renderer 25 can then return the data to the workstation 20 for display and/or to a map-GIS information database 60.

The elements of the system 10 can be implemented with control circuitry, a programmable processor, and software, stored on local computer readable medium, as would be understood by those of skill in the art. The workstation 20 can include a viewing screen for interfacing with a user. In some embodiments, the viewing screen can be an interactive multi-dimensional graphical user interface.

The interactive and viewing windows shown and described herein are exemplary only. Those of skill in the art will understand that the features of the windows shown and described herein may be displayed by additional or alternate windows.

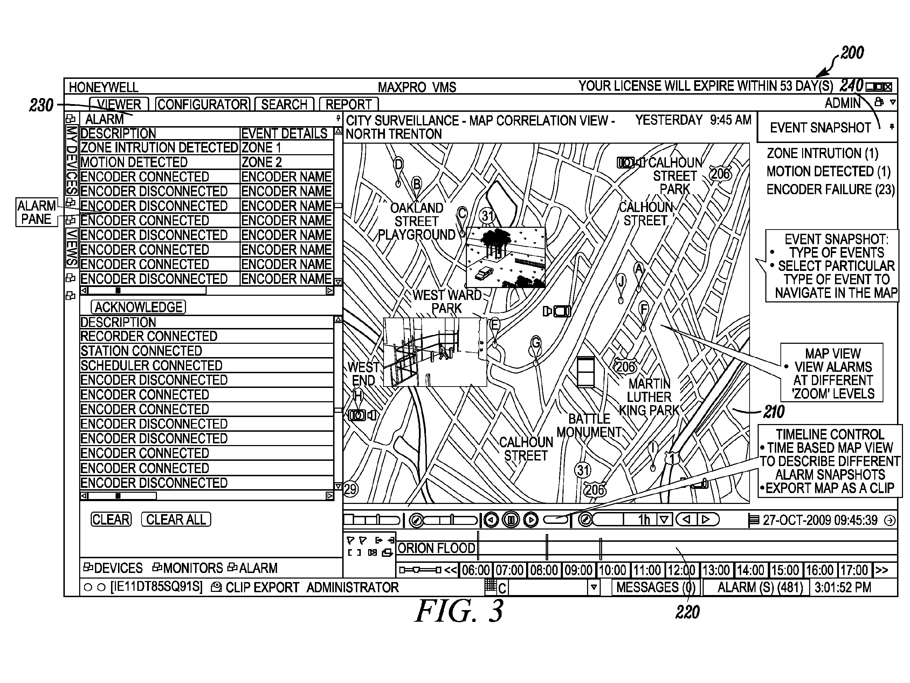

FIG. 3 is an interactive window 200 displayed on a viewing screen of a graphical user interface for viewing a floor plan map of a monitored area in accordance with the present invention. The window 200 can include a pane 210 for displaying a floor plan map, a pane 220 for displaying a time controller, a pane 230 for displaying a list of past alarm incidents, and a pane 240 for displaying a list of event types displayed on the floor plan map.

The window 200 can display a floor plan map of a monitored area with respect to time. For example, a user can adjust the time for display with the time controller in pane 220. The user can also select an incident for viewing from the list of past alarm incidents in pane 230, or the user can select a particular type of event to view from the list of event types in pane 240. In embodiments of the present invention, the floor plan map can zoom in or out for calibrating the display.

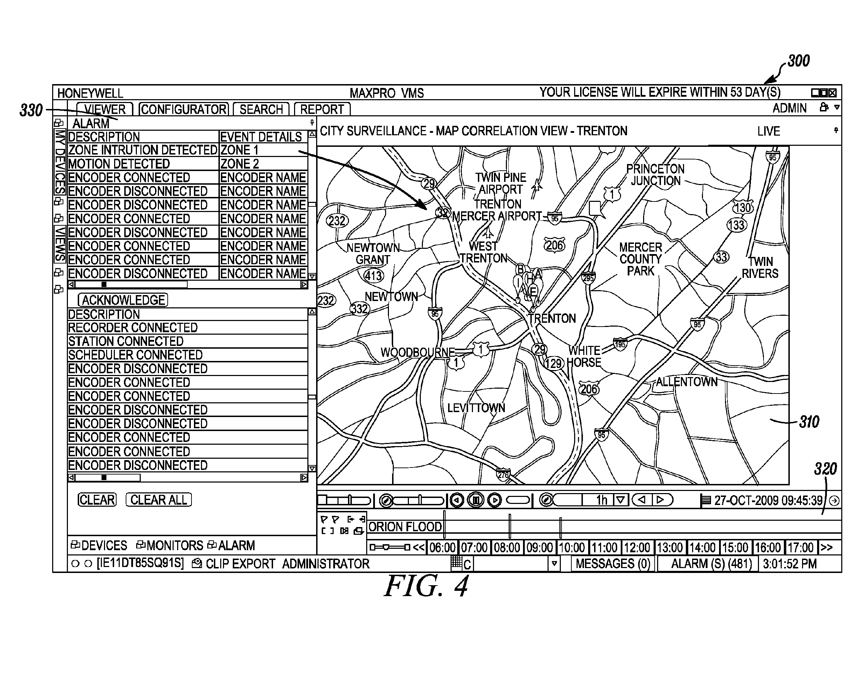

FIG. 4 is an interactive window 300 displayed on a viewing screen of a graphical user interface for selecting a past alarm incident in accordance with the present invention. As seen in FIG. 4, the pane 330 for displaying a list of past alarm incidents can include a "Zone Intrusion Detected" incident that occurred in Zone 1, for example. A user can select this incident from the list in pane 330 for viewing on the floor plan map in pane 310.

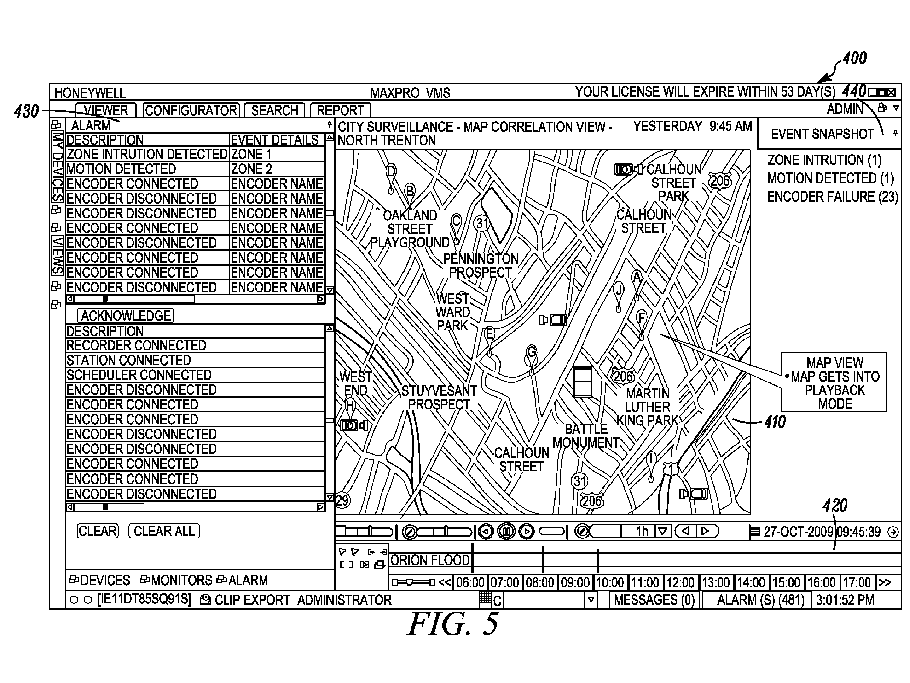

FIG. 5 is an interactive window 400 displayed on a viewing screen of a graphical user interface for displaying a floor plan map with a past alarm incident in accordance with the present invention. As seen in FIG. 5, the floor plan map in the pane 410 can recalibrate to appropriate and effectively display the selected past alarm incident and all alarms in the monitored area that occurred during the selected past alarm incident. Thus, the floor plan map displayed in pane 410 is a view of the map during the time of the selected past alarm incident.

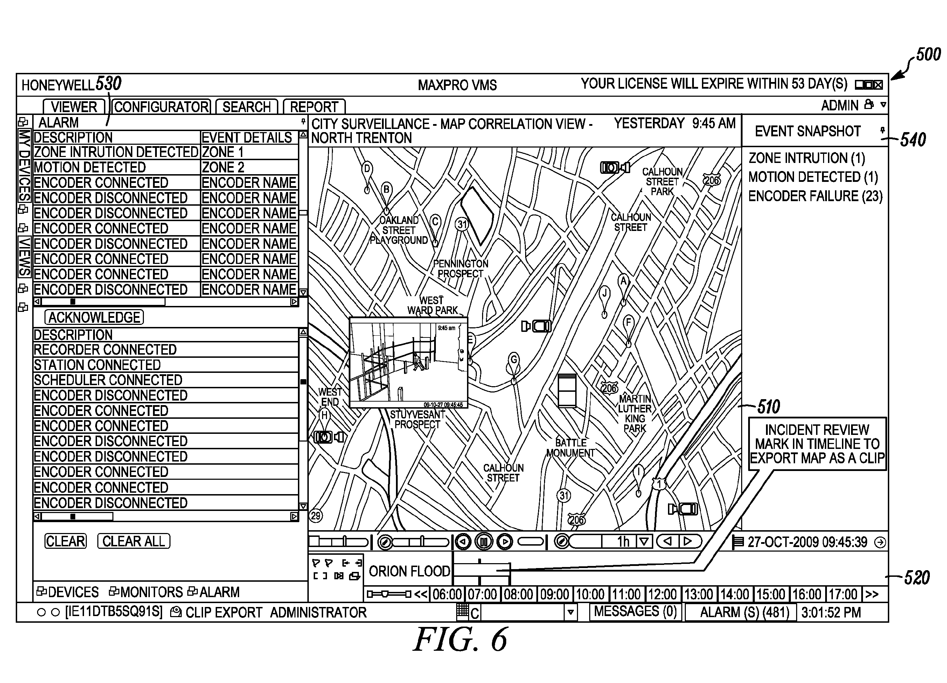

FIG. 6 is an interactive window 500 displayed on a viewing screen of a graphical user interface for viewing video associated with a past alarm incident in accordance with the present invention. As seen in FIG. 6, a user can view video data streams associated with alarms displayed on the floor plan map in pane 510 and can use the time controller in pane 520 to fast forward and/or reverse the display of the video data streams. Thus, the floor plan map can display the order and manner in which alarms were generated relative to a timeline.

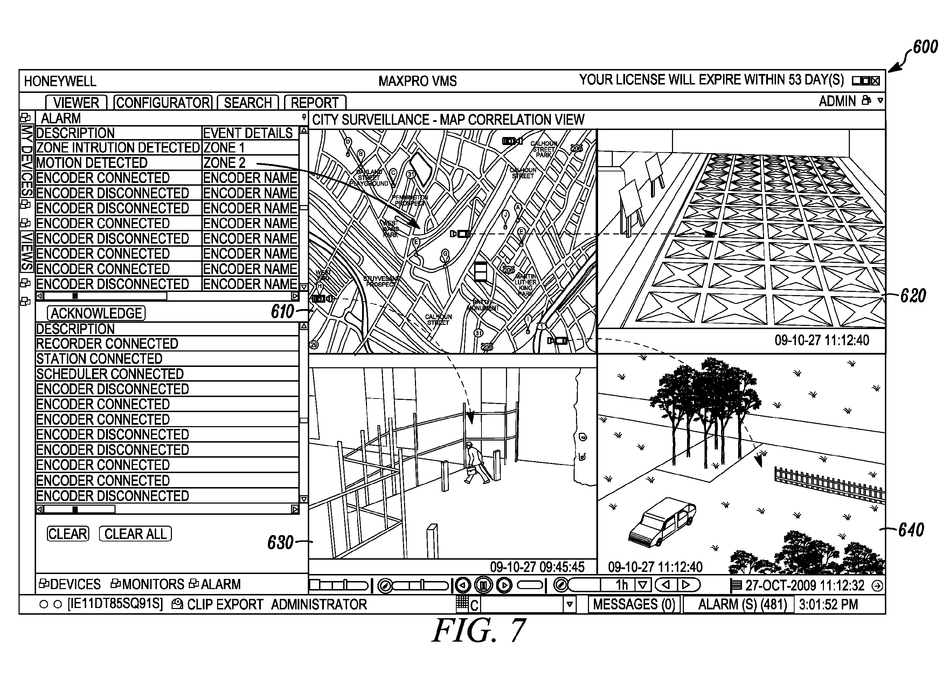

As seen in FIG. 7, a window 600 can include panes 610, 620, 630, and 640. The pane 610 can display the floor plan map, and the panes 620, 630, and 640 can display video data streams associated with alarms displayed on the floor plan map. Thus, systems and methods of the present invention can display a holistic view of the monitored area relative to a past alarm incident.

In embodiments of the present invention, video data streams associated with the alarms can be exported for future use. In some embodiments, the exported video data streams can include location and time information.

From the foregoing, it will be observed that numerous variations and modifications may be effected without departing from the spirit and scope of the invention. It is to be understood that no limitation with respect to the specific system or method illustrated herein is intended or should be inferred. It is, of course, intended to cover by the appended claims all such modifications as fall within the sprit and scope of the claims.

## Claims

1. A method comprising:
selecting at least one past alarm incident; and
populating a floor plan map with representations of the past alarm incident and a set of alarms that were active during the past alarm incident.

2. The method of claim 1 wherein selecting at least one past alarm incident includes selecting a past time in which the past alarm incident occurred.

3. The method of claim 1 further comprising recalibrating the floor map with the past alarm incident and the set of alarms that were active during the past alarm incident.

4. The method of claim 1 further comprising displaying video data streams associated with at least one of the past alarm incident and the set of alarms that were active during the past alarm incident.

5. The method of claim 1 further comprising adjusting a view of the floor plan map relative to time.

6. The method of claim 1 further comprising exporting video data streams associated with at least one of the past alarm incident and the set of alarms that were active during the past alarm incident.

7. The method of claim 1 further comprising sorting the set of alarms that were active during the past alarm incident according to type of alarm.

8. The method of claim 7 further comprising repopulating the floor plan map with representations of one type of alarm from the set of alarms.

9. The method of claim 1 further comprising displaying operator activity during the past alarm incident.

10. An apparatus comprising:
circuitry that retrieves a selected past alarm incident; and
circuitry that populates a floor plan map with representations of the past alarm incident and a set of alarms that were active during the past alarm incident.

11. The apparatus of claim 10 wherein the circuitry that retrieves a selected past alarm incident includes circuitry that selects a past time in which the past alarm incident occurred.

12. The apparatus of claim 10 further comprising circuitry that recalibrates the floor map with the past alarm incident and the set of alarms that were active during the past alarm incident.

13. The apparatus of claim 10 further comprising circuitry that displays video data streams associated with at least one of the past alarm incident and the set of alarms that were active during the past alarm incident.

14. The apparatus of claim 10 further comprising circuitry that adjusts a view of the floor plan map relative to time.

15. The apparatus of claim 10 further comprising circuitry that exports video data streams associated with at least one of the past alarm incident and the set of alarms that were active during the past alarm incident.
